# EUROPÄISCHE PATENTSCHRIFT

(11) **EP 3 262 240 B1**
(45) Veröffentlichungstag und Bekanntmachung des Hinweises auf die Patenterteilung: **06.11.2019**
(21) Anmeldenummer: 16707033.3
(22) Anmeldetag: 23.02.2016
(51) Int. Cl.: E02D 27/42, E02D 5/28, E02D 5/22, E02D 5/50, E02D 5/30, F03D 13/20

(54) **WINDENERGIEANLAGEN-FUNDAMENT UND WINDENERGIEANLAGE**
WIND POWER PLANT FOUNDATION AND WIND POWER PLANT
SOCLE D'ÉOLIENNE ET ÉOLIENNE

(30) Priorität: 27.02.2015 DE 102015203574
(43) Veröffentlichungstag der Anmeldung: 03.01.2018
(73) Patentinhaber: Wobben Properties GmbH, 26607 Aurich (DE)
(72) Erfinder: BERAMENDI ORTEGA, Hugo Rodrigo, 26603 Aurich (DE); RANDEL, Britta, 39317 Elbe-Parey (DE); KERSTEN, Roy, 39291 Hohenwarthe (DE)
(74) Vertreter: Eisenführ Speiser
(86) Internationale Anmeldenummer: PCT/EP2016/053785
(87) Internationale Veröffentlichungsnummer: WO 2016/135148

(56) Entgegenhaltungen:
- GB-A- 2 460 551
- US-A1- 2014 115 978

## Beschreibung

Die vorliegende Erfindung betrifft ein Windenergieanlagen-Fundament sowie eine Windenergieanlage.

Jede Windenergieanlage benötigt ein Fundament, auf welchem ein Turm der Windenergieanlage platziert werden kann. An Fundamente von Windenergieanlagen werden sehr spezielle Anforderungen gestellt, da das Fundament auf die Windenergieanlage wirkende Kräfte und Drehmomente sicher ableiten muss. Diese Kräfte und Drehmomente entstehen sowohl durch den Wind, welcher auf die Windenergieanlage trifft als auch durch die Rotation des Rotors der Windenergieanlage.

In der prioritätsbegründenden deutschen Patentanmeldung hat das Deutsche Patent- und Markenamt die folgenden Dokumente recherchiert: DE 10 2013 216 343 A1 und US 2014/0115978 A1.

Es ist somit eine Aufgabe der vorliegenden Erfindung, ein Windenergieanlagen-Fundament sowie eine Windenergieanlage vorzusehen, welche einen effizienteren Aufbau des Fundaments bei unterschiedlichen Witterungsbedingungen ermöglicht.

Diese Aufgabe wird durch ein Windenergieanlagen-Fundament nach Anspruch 1, durch eine Windenergieanlage nach Anspruch 10 und durch ein Verfahren nach Anspruch 11 gelöst.

Somit wird ein Windenergieanlagen-Fundament mit einer zylinderförmigen Zentraleinheit, einer Mehrzahl von Stahlträgern, welche radial um die Zentraleinheit herum angeordnet sind und jeweils ein erstes und zweites Ende aufweisen sowie einer Mehrzahl von Fundament-Pfählen vorgesehen. Die ersten Enden der Stahlträger sind an der Zentraleinheit befestigt, so dass die zweiten Enden der Stahlträger als freie Enden ausgestaltet sind.

Die zweiten freien Enden der Stahlträger sind jeweils auf einem der Fundament-Pfähle platziert.

Gemäß einem Aspekt der vorliegenden Erfindung weist das Windenergieanlagen-Fundament eine Mehrzahl von Nivellierplatten auf, welche auf den Fundament-Pfählen angeordnet sind und nach einer entsprechenden Nivellierung die zweiten freien Enden der Stahlträger aufnehmen.

Gemäß der vorliegenden Erfindung weist das Windenergieanlagen-Fundament eine Mehrzahl von Betonfertigteilen auf, welche jeweils zwischen benachbarten Stahlträgern platziert werden, so dass durch die Betonfertigteile und den benachbarten Stahlträgern eine Wanne entsteht, die z. B. mit Beton gefüllt werden kann.

Gemäß einem weiteren Aspekt der vorliegenden Erfindung weist die Zentraleinheit ein erstes und zweites Ende auf, wobei ein unteres Turmsegment einer Windenergieanlage oder eine Turmsektion auf dem zweiten Ende der Zentraleinheit platziert werden kann.

Gemäß einem weiteren Aspekt der vorliegenden Erfindung weist der Stahlträger im Bereich seiner zweiten Enden Versteifungsstreben auf.

Gemäß einem weiteren Aspekt der vorliegenden Erfindung weisen die Fundament-Pfähle im Bereich ihres oberen Endes jeweils einen Fundamentanker zur Befestigung der jeweiligen zweiten Enden der Stahlträger auf.

Gemäß einem weiteren Aspekt der vorliegenden Erfindung weisen die Fundament-Pfähle einen ersten, zweiten und dritten Abschnitt auf, wobei der Durchmesser des dritten Abschnittes größer ist als der des ersten oder zweiten Abschnittes.

Gemäß einem weiteren Aspekt der vorliegenden Erfindung ist der erste, zweite und dritte Abschnitt der Fundament-Pfähle jeweils als ein Rohr ausgestaltet.

Gemäß einem weiteren Aspekt der vorliegenden Erfindung weisen die Fundament-Pfähle jeweils eine Mehrzahl von in Längsrichtung verlaufenden Streben oder Stäben sowie mindestens eine Wendel auf.

Gemäß einem weiteren Aspekt der vorliegenden Erfindung sind die Fundament-Pfähle mit Beton ausgefüllt.

Die zweiten freien Enden der Stahlträger sind jeweils auf einem der Fundament-Pfähle platziert.

Die Erfindung betrifft ferner eine Windenergieanlage mit einem oben beschriebenen Windenergieanlagen-Fundament. Weitere Ausgestaltungen der Erfindung sind Gegenstand der Unteransprüche.

Vorteile und Ausführungsbeispiele der Erfindung werden nachfolgend unter Bezugnahme auf die Zeichnung näher erläutert.
- Fig. 1: zeigt eine schematische, perspektivische Ansicht eines Fundaments einer Windenergieanlage gemäß einem ersten Ausführungsbeispiel,
- Fig. 2: zeigt eine Draufsicht auf ein Fundament einer Windenergieanlage gemäß einem zweiten Ausführungsbeispiel,
- Fig. 3A: zeigt eine Schnittansicht eines Fundaments einer Windenergieanlage gemäß einem dritten Ausführungsbeispiel,
- Fig. 3B: zeigt eine Schnittansicht eines Aufschnitts des Fundaments der Windenergieanlage gemäß dem dritten Ausführungsbeispiel,
- Fig. 3C: zeigt eine perspektivische und schematische Ansicht eines Teils eines Fundaments einer Windenergieanlage gemäß dem dritten Ausführungsbeispiel,
- Fig. 4A: zeigt eine Schnittansicht eines Fundament-Pfahles eines Fundaments gemäß der Erfindung,
- Fig. 4B: zeigt eine schematische Schnittansicht eines Rohres des Fundament-Pfahles von Fig. 4A,
- Fig. 4C-4E: zeigen jeweils eine Schnittansicht des Pfahles von Fig. 4A,
- Fig. 4F: zeigt eine schematische Anordnung der Fundament-Pfähle in einem Fundament gemäß der Erfindung,
- Fig. 5A: zeigt eine Schnittansicht einer Zentraleinheit eines Fundaments einer Windenergieanlage,
- Fig. 5B: zeigt eine schematische Draufsicht auf den Stahlträger des Fundamentes gemäß der Erfindung,
- Fig. 5C: zeigt eine weitere Draufsicht auf einen Stahlträger des Fundaments gemäß der Erfindung von Fig. 5B,
- Fig. 5D: zeigt eine Draufsicht auf ein Ende eines Stahlträgers gemäß Fig. 5A,
- Fig. 5E: zeigt eine Draufsicht auf ein Ende eines Stahlträgers von Fig. Fig. 5A,
- Fig. 5F: zeigt eine schematische Ansicht eines Aufschnitts eines Fundaments einer Windenergieanlage gemäß der Erfindung,
- Fig. 5G: zeigt eine schematische Ansicht eines Abschnitts eine Fundaments einer Windenergieanlage gemäß der Erfindung, und
- Fig. 6A-6H: zeigen verschiedene Ansichten von Betonfertigteilen des Fundaments der Windenergieanlage gemäß der Erfindung.

Das erfindungsgemäße Windenergieanlagen-Fundament ist im Wesentlichen ein Stahlfundament, welches eine zylinderförmige Zentraleinheit und davon radial abgehende Stahlarme oder Stahlträger aufweist. Die Zentraleinheit und die Stahlarme bilden zusammen einen Fundament-Stern. Die freien Enden der Stahlarme liegen jeweils auf einem Fundament-Pfahl auf. Zwischen benachbarten Stahlarmen werden Betonfertigteile platziert, so dass durch die benachbarten Stahlarme und die Betonfertigteile eine Wanne entsteht, welche mit Beton, Kies und/oder Erde gefüllt werden kann. Alternativ dazu kann die Wanne auch mit vorgefertigten Betonteilen gefüllt werden. Somit stellt das erfindungsgemäße Windenergieanlagen-Fundament eine Pfahlgründung dar. Das erfindungsgemäße Fundament stellt ein Hybrid-Fundament aus einer Kombination aus Stahlträgern und Betonfertigteilen dar.

Das erfindungsgemäße Fundament eignet sich insbesondere für Permafrostböden.

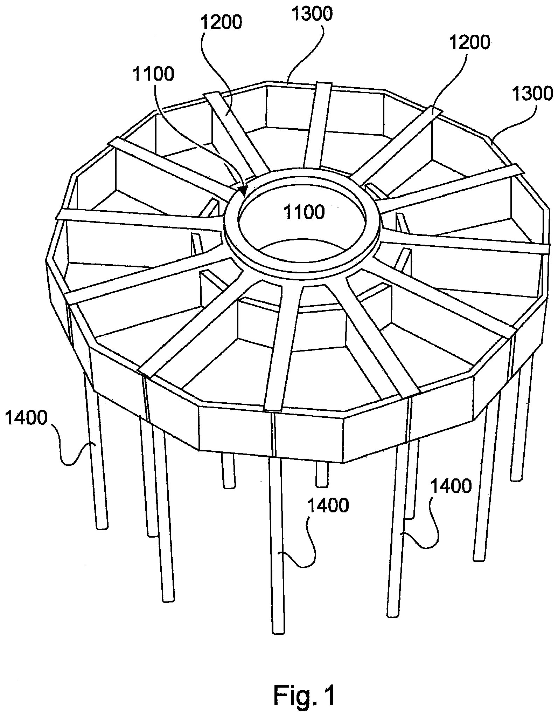

Fig. 1 zeigt eine schematische, perspektivische Ansicht eines Fundaments einer Windenergieanlage gemäß einem ersten Ausführungsbeispiel. Das erfindungsgemäße Windenergieanlagen-Fundament weist eine zylinderförmige Zentraleinheit 1100 und eine Mehrzahl von sich radial erstreckenden Stahlarmen oder Stahlträgern 1200 auf. Ein erstes Ende der Stahlarme ist mit der zylinderförmigen Zentraleinheit 1100 befestigt, während das andere zweite, freie Ende der Stahlarme oder Stahlträger 1200 jeweils auf einem Fundament-Pfahl 1400 aufliegt. Mit anderen Worten, nur die zweiten freien Enden der sich radial erstreckenden Stahlarme 1200 liegen den Fundament-Pfählen 1400 auf.

Zwischen den Stahlarmen 1200 sind Betonfertigteile 1300 so platziert, dass eine Wanne entsteht.

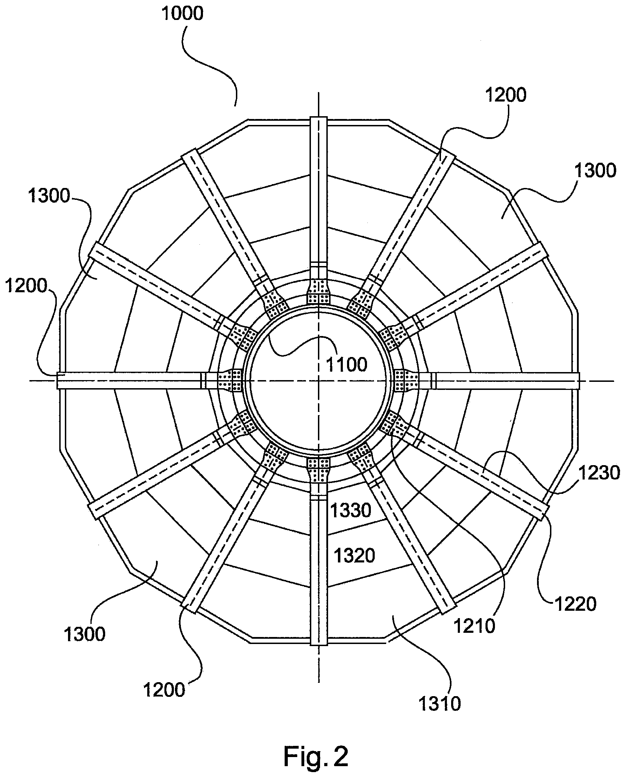

Fig. 2 zeigt eine Draufsicht auf ein Fundament einer Windenergieanlage gemäß einem zweiten Ausführungsbeispiel. Das Windenergieanlagen-Fundament 1000 gemäß dem zweiten Ausführungsbeispiel kann dem Windenergieanlagen-Fundament gemäß dem ersten Ausführungsbeispiel entsprechen. Das Windenergieanlagen-Fundament 1000 weist eine zylinderförmige Zentraleinheit 1100 auf. Eine Mehrzahl von Stahlarmen oder Stahlträgern 1200 sind mit ihrem ersten Ende an der Zentraleinheit 1100 befestigt. Die Stahlarme oder Stahlträger 1200 erstrecken sich radial von der Zentraleinheit 1100 aus. Optional ist der Winkel zwischen zwei benachbarten Stahlträgern oder Stahlarmen 1200 30°, so dass beispielsweise 12 Stahlarme oder Stahlträger 1200 vorgesehen sind. Zwischen zwei benachbarten Stahlarmen oder Stahlträgern 1200 sind Betonfertigteile 1300 vorgesehen. Insbesondere sind jeweils drei Betonfertigteile 1310, 1320, 1330 vorgesehen. Das erste Betonfertigteil 1310 ist außen vorgesehen und weist eine Wandung auf. Das zweite Betonfertigteil 1320 ist in der Mitte vorgesehen und das dritte Betonfertigteil 1330 ist zur Zentraleinheit 1100 hin vorgesehen und kann eine weitere Wandung aufweisen. Durch die drei Betonfertigteile und die zwei benachbarten Stahlträger wird eine Wanne ausgebildet.

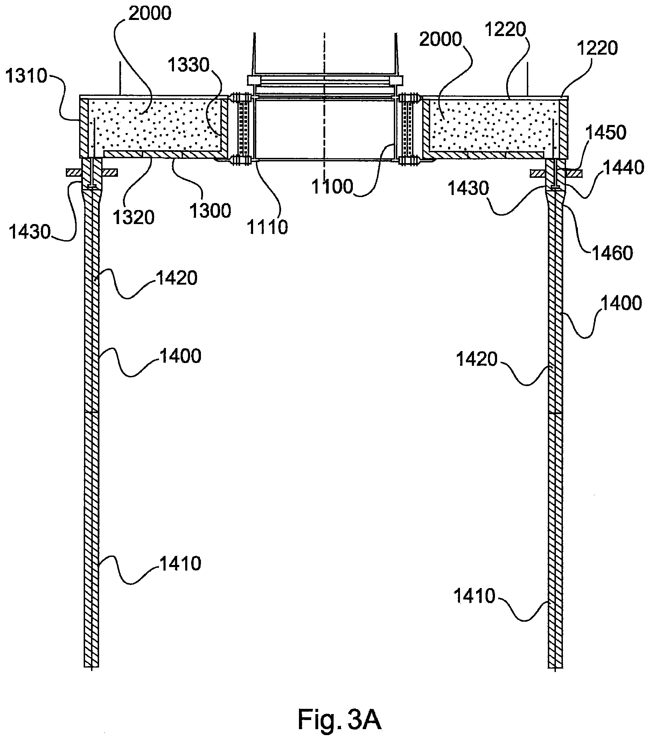

Fig. 3A zeigt eine Schnittansicht eines Fundaments einer Windenergieanlage gemäß einem dritten Ausführungsbeispiel. Um die zylinderförmige Zentraleinheit 1100 ist eine Mehrzahl von Stahlarmen oder Stahlträgern 1200 vorgesehen. Die freien Enden der Stahlträger 1200 liegen auf Fundament-Pfählen 1400 auf. Jeder Fundament-Pfahl 1400 weist einen ersten unteren Abschnitt 1410, einen zweiten mittleren Abschnitt 1420 sowie einen dritten oberen Abschnitt 1430 auf. Die Stahlarme oder Stahlträger 1200 liegen dabei auf den dritten Abschnitt 1430 auf. Die freien Enden 1220 der Stahlarme 1200 können beispielsweise über Segmentanker 1440 und Stangen, wie beispielsweise Gewindestangen 1450, an den dritten Abschnitten 1430 der Fundament-Pfähle 1400 befestigt werden. Zwischen den Stahlarmen 1200 werden die Betonfertigteile 1310, 1320 und 1330 vorgesehen, wobei die ersten Betonteile 1310 eine Außenwandung und die dritten Betonfertigteile 1330 eine Innenwandung aufweisen. Somit entsteht durch die ersten bis dritten Betonfertigteile und die zwei benachbarten Stahlarme 1200 eine Wanne, welche durch Sand, Erde, Kies oder Beton 2000 gefüllt werden kann.

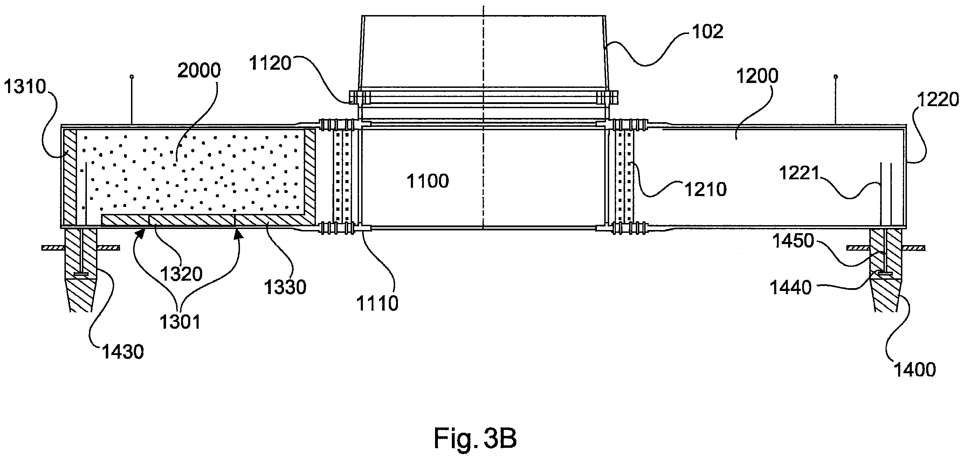

Fig. 3B zeigt eine Schnittansicht eines Aufschnitts des Fundaments der Windenergieanlage gemäß dem dritten Ausführungsbeispiel. Das erfindungsgemäße Windenergieanlagen-Fundament weist eine zylinderförmige Zentraleinheit 1100 mit einer Mehrzahl von daran befestigten und sich radial erstreckenden Stahlarmen oder Stahlträgern 1200 auf. Zwischen den Stahlträgern sind Betonfertigteile 1300 vorgesehen, welche zusammen mit den Stahlträgern eine Wanne ausbilden, in welche Sand, Erde, Kies, Beton 2000 gefüllt werden kann. Die Betonfertigteile 1310, 1320, 1330 können Drainageöffnungen 1301 aufweisen.

Die freien Enden 1220 der Stahlarme 1200 liegen auf den dritten Abschnitten 1430 der Fundament-Pfähle 1400 auf. Die zweiten (freien) Enden 1220 der Stahlarme können über Fundamentanker 1440 und Fundamentanker 1450 jeweils an einen der Fundament-Pfähle 1400 befestigt werden. Die ersten Enden 1210 der Stahlträger 1200 sind jeweils an der Zentraleinheit 1100 befestigt.

Die Zentraleinheit 1100 weist eine erste (untere) Seite 1110 und eine zweite (obere) Seite 1120 auf. Auf die zweite (obere) Seite 1120 wird ein unteres Turmsegment 102 bzw. eine Turmsektion der Windenergieanlage platziert.

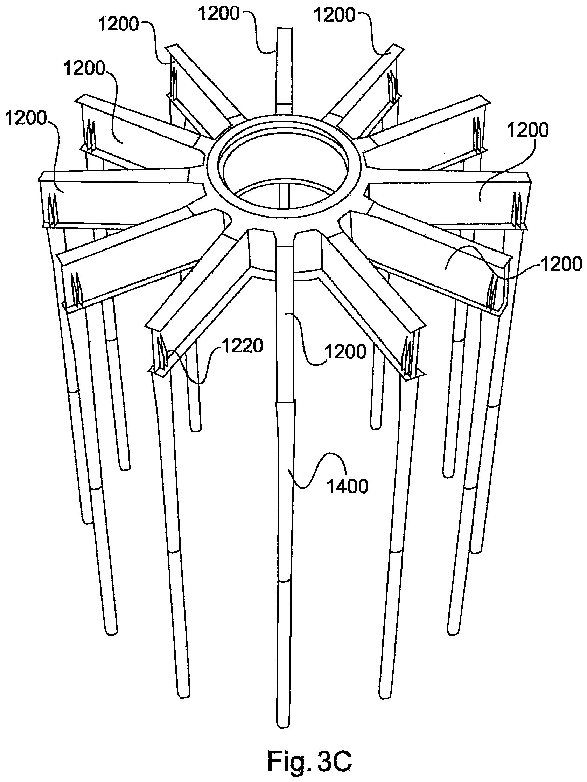

Fig. 3C zeigt eine perspektivische und schematische Ansicht eines Teils eines Fundaments einer Windenergieanlage gemäß dem dritten Ausführungsbeispiel. In Fig. 3C ist das Fundament der Windenergieanlage ohne die Betonfertigteile gezeigt. Damit ist insbesondere die zylinderförmige Zentraleinheit 1100 sowie die sich radial erstreckenden Stahlarme bzw. Stahlträger 1200, d.h. der Fundament-Stern, zu sehen. Die freien Enden 1220 der Stahlträger liegen dabei jeweils auf einem Fundament-Pfahl 1400, so dass eine Pfahlgründung erreicht wird.

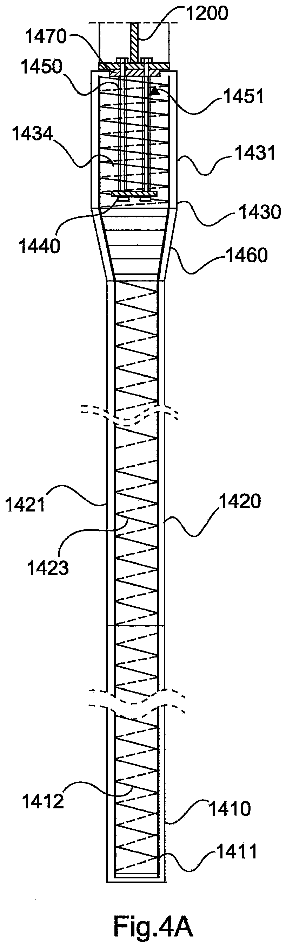

In den Fig. 4A-4F werden verschiedene Ansichten der Fundament-Pfähle gemäß der Erfindung dargestellt.

Fig. 4A zeigt eine Schnittansicht eines Fundament-Pfahles eines Fundaments gemäß der Erfindung. Der Fundament-Pfahl 1400 weist einen ersten, zweiten und dritten Abschnitt 1410, 1420, 1430 auf. Der erste Abschnitt 1410 ist dabei der unterste Abschnitt, während der zweite Abschnitt 1420 den mittleren Abschnitt darstellt. Der dritte Abschnitt 1430 ist der obere Abschnitt, auf welchen die freien Enden 1220 der Stahlträger 1200 aufliegen. Im dritten Abschnitt 1430 sind jeweils ein Segmentanker 1440 sowie zwei Gewindebolzen 1450 vorgesehen. Die Gewindebolzen 1450 können sich innerhalb eines PU-Schaumrohres 1451 befinden.

Auf der Oberseite des dritten Abschnittes 1430 ist jeweils eine Nivellierplatte 1470 vorgesehen. Mittels der Gewindebolzen 1450 kann der dritte Abschnitt 1430 des Fundament-Pfahles 1400 an ein unteres Ende des Stahlarmes bzw. Stahlträgers 1200 befestigt werden. Bevor die Stahlträger 1200 befestigt werden, können die jeweiligen Nivellierplatten 1470 der jeweiligen Fundament-Pfähle 1400 nivelliert werden, sodass die Unterseiten der jeweiligen Stahlträger bzw. Stahlarme 1200 nivelliert sind, wodurch auch die Zentraleinheit nivelliert ist. Die Nivellierung der Zentraleinheit 1100 ist sehr wichtig, weil auf der zweiten Seite 1120 der Zentraleinheit 1100 ein unteres Turmsegment oder eine Turmsektion 102 platziert werden kann. Der Turm 102 der Windenergieanlage kann nur dann exakt vertikal ausgerichtet sein, wenn die zweite (obere) Seite 1120 der Zentraleinheit 1100 exakt horizontal ausgerichtet ist. Diese exakte horizontale Ausrichtung wird durch die Platzierung und Ausrichtung der Nivellierplatten 1470 auf den oberen Enden der dritten Abschnitte 1430 der Fundament-Pfähle 1200 erreicht.

Der dritte Abschnitt 1430 des Fundament-Pfahles 1400 weist ein Stahlrohr 1431 und eine Wendel oder Spirale 1434 auf.

Die erfindungsgemäßen Gewindebolzen 1450 können zumindest an ihren beiden Enden ein Gewinde aufweisen. Im Bereich dazwischen, d.h. im mittleren Abschnitt muss kein Gewinde vorgesehen sein.

Zwischen dem dritten und zweiten Abschnitt 1430, 1420 ist ein Stahltrichter 1460 vorgesehen, welcher den Durchmesser des dritten Abschnittes 1430 auf den Durchmesser des zweiten Abschnittes 1420 reduziert.

Der zweite Abschnitt 1420 weist ebenfalls ein Stahlrohr 1421 und eine zweite Wendel oder Spirale 1423 auf.

Der erste Abschnitt 1410 weist ebenfalls ein Stahlrohr 1411 auf, welches den gleichen Durchmesser hat wie das Stahlrohr 1421 des zweiten Abschnittes. Innerhalb des Stahlrohres 1411 ist eine Wendel oder Spirale 1412 vorgesehen.

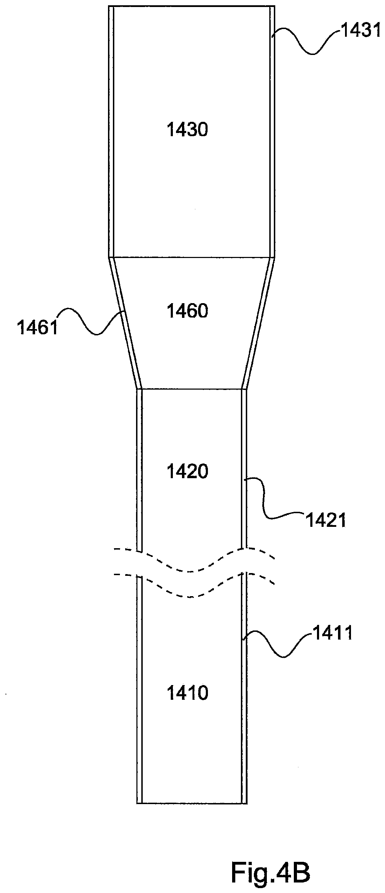

Fig. 4B zeigt eine schematische Schnittansicht eines Rohres des Fundament-Pfahles von Fig. 4A. In Fig. 4B ist der erste, zweite und dritte Abschnitt 1410, 1420, 1430 sowie der Trichter 1460 zwischen dem zweiten und dritten Abschnitt gezeigt. Der Trichter 1460 dient dazu, den Durchmesser des dritten Abschnittes 1430 an den Durchmesser des zweiten Abschnittes 1420 anzupassen. Der erste Abschnitt 1410 weist ein erstes Stahlrohr 1411, der zweite Abschnitt 1420 weist ein zweites Stahlrohr 1421 und der dritte Abschnitt 1430 weist ein drittes Stahlrohr 1431 auf.

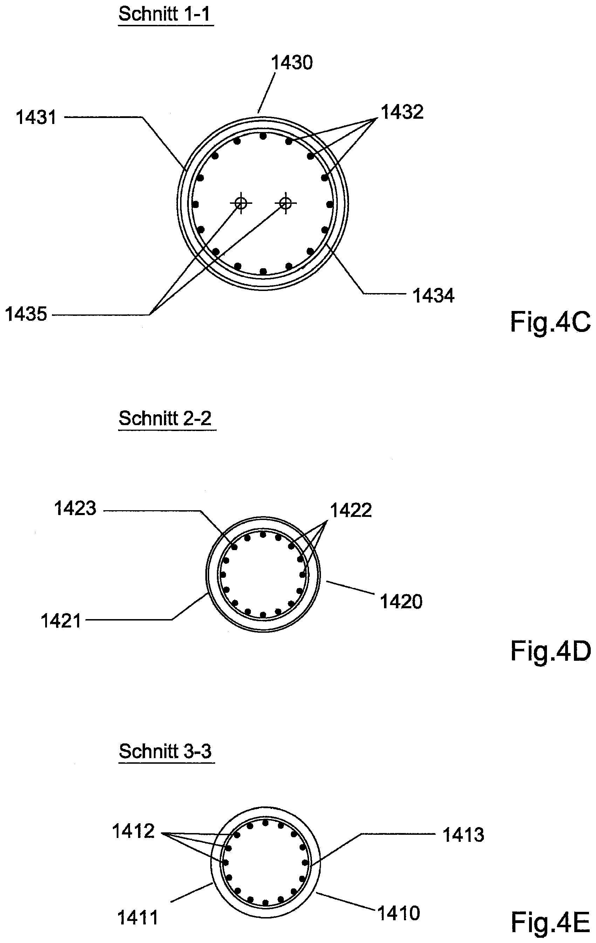

Fig. 4C zeigt eine Schnittansicht entlang des Schnittes 1-1 von Fig. 4A im Bereich des dritten Abschnittes 1430. Der dritte Abschnitt 1430 weist ein Stahlrohr 1431, beispielsweise 16 Stäbe 1432, eine Wendel oder Spirale 1434 sowie zwei Bohrungen 1435 auf, welche dazu dienen, die Gewindebolzen 1450 aufzunehmen. Das Stahlrohr 1431 kann beispielsweise mit Beton gefüllt werden.

Fig. 4D zeigt eine Schnittansicht entlang des Schnittes 2-2 von Fig. 4A im Bereich des zweiten Abschnittes 1420 des Fundament-Pfahles 1400. Der zweite Abschnitt 1420 weist ein zweites Stahlrohr 1421, eine Wendel oder Spirale 1423 sowie beispielsweise 16 Stäbe 1422 auf.

Das Stahlrohr 1421 des zweiten Abschnittes 1420 kann beispielsweise mit Beton gefüllt werden.

Fig. 4E zeigt eine Schnittansicht entlang des Schnittes 3-3 von Fig. 4A im Bereich eines ersten Abschnittes 1410 des Fundament-Pfahles 1400.

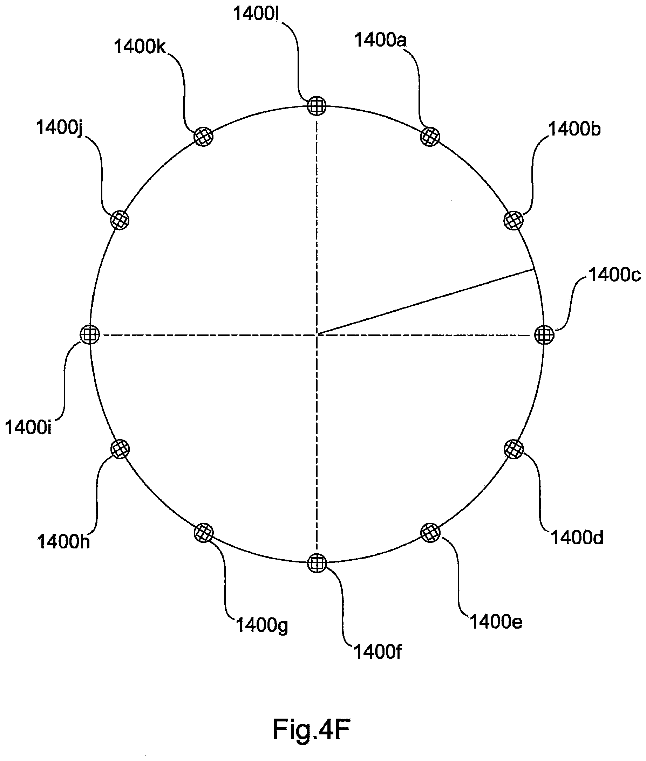

Fig. 4F zeigt eine schematische Darstellung der Anordnung von 12 Fundament-Pfählen 1400a-l. Auf diesen Pfählen werden die freien Enden der Stahlträger bzw. Stahlarme 1200 platziert.

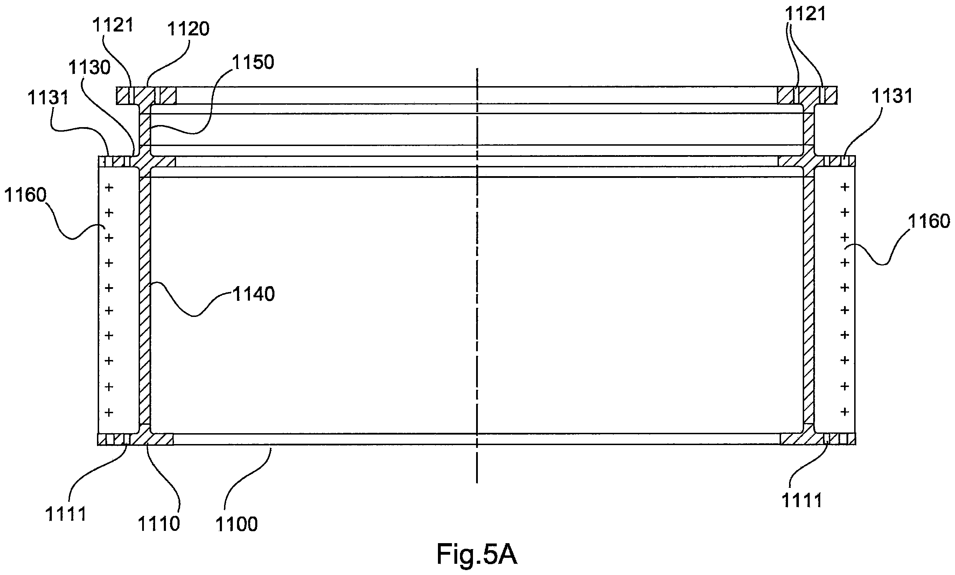

Fig. 5A zeigt eine Schnittansicht einer Zentraleinheit eines Fundaments einer Windenergieanlage. Die Zentraleinheit 1100 ist zylinderförmig ausgestaltet und weist ein erstes (unteres) Ende 1110, ein zweites (oberes) Ende 1120, einen ersten Abschnitt 1140 und einen zweiten Abschnitt 1150 auf. Zwischen dem ersten und zweiten Abschnitt 1140 und 1150 ist ein Flansch 1130 mit einer Mehrzahl von Bohrungen 1131 vorgesehen.

Am ersten (unteren) Ende 1110 ist ebenfalls ein Flansch mit einer Mehrzahl von Bohrungen 1111 vorgesehen. Das zweite (obere) Ende 1120 weist ebenfalls eine Mehrzahl von Bohrungen 1121 auf. Im Bereich des ersten Abschnittes 1140 ist an der Außenseite eine Mehrzahl von Befestigungsabschnitten 1160 vorgesehen, welche dazu dienen, dass die jeweiligen ersten Seiten (1210) der Stahlarme oder Stahlträger 1200 daran befestigt oder verschweißt werden.

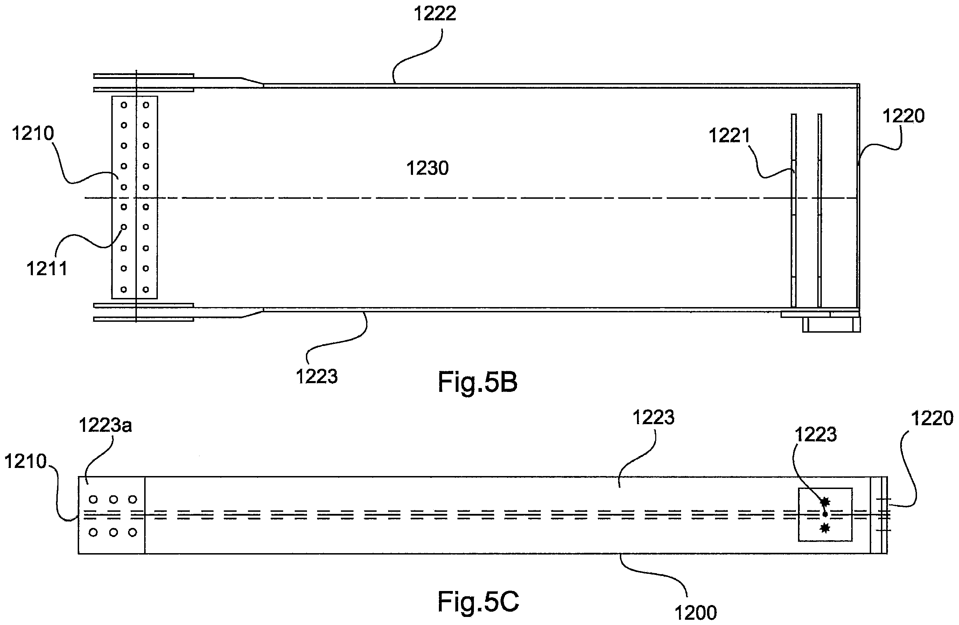

Fig. 5B zeigt eine schematische Draufsicht auf einen Stahlträger des Fundamentes gemäß der Erfindung. Der Stahlarm bzw. Stahlträger 1200 weist ein erstes Ende 1210 und ein zweites Ende 1220 auf, wobei das erste Ende 1210 an der Zentraleinheit und insbesondere an dem Befestigungsabschnitt 1160 befestigt wird. Die zweiten Enden 1220 weisen auf beiden Seiten Stützstreben 1121 auf. Der Stahlträger bzw. Stahlarm 1200 weist eine erste (untere) Seite 1223 und eine zweite (obere) Seite 1222 auf. Optional können die jeweiligen ersten Enden 1210 der Stahlträger 1200 an den Befestigungsabschnitten 1160 der Zentraleinheit 1100 verschweißt werden. Die Stahlträger 1200 weisen jeweils einen mittleren Abschnitt 1230 auf, welcher sich zwischen der ersten und zweiten Seite 1223, 1222 erstreckt. Der mittlere Abschnitt 1230 kann beispielsweise als ein Stahlblech ausgestaltet sein.

Fig. 5C zeigt eine weitere Draufsicht auf einen Arm des Fundaments gemäß der Erfindung von Fig. 5B. In Fig. Fig. 5C ist insbesondere die erste (untere) Seite 1223 gezeigt. Im Bereich der ersten Seite 1210 des Stahlträgers 1200 ist ein Befestigungs-Schweißabschnitt 1223a vorgesehen. Im Bereich der zweiten Seite 1220 des Stahlträgers 1200 ist eine Platte 1223b vorgesehen.

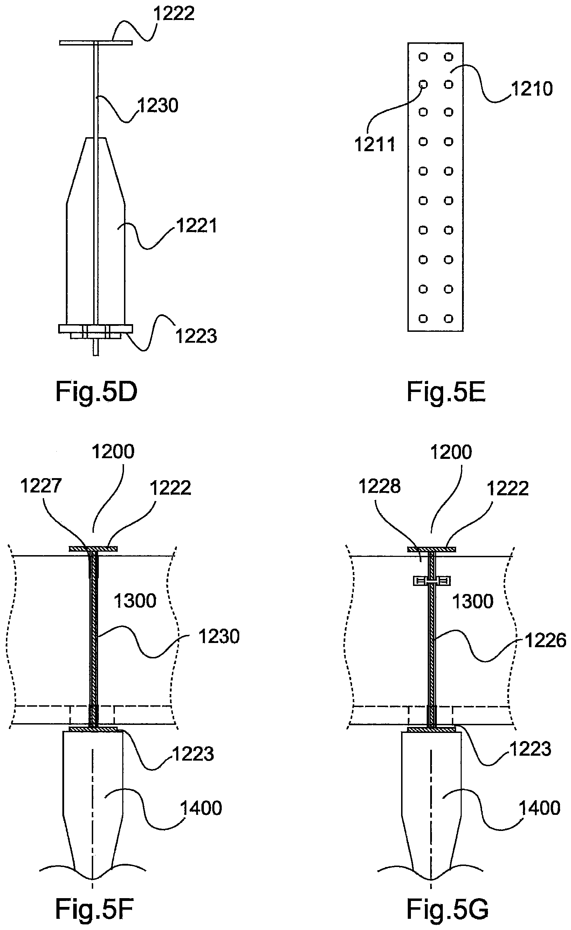

Fig. 5D zeigt eine Draufsicht auf ein Ende eines Armes gemäß Fig. 5A. In Fig. 5D ist eine Seitenansicht eines Stahlträgers eines Fundaments gemäß der Erfindung gezeigt. Der Stahlträger weist eine erste (untere) Seite 1223, eine zweite (obere) Seite 1222 sowie ein Blech 1230 dazwischen auf. Auf beiden Seiten des Bleches 1230 sind Versteifungsstreben 1221 vorgesehen.

Fig. 5E zeigt eine Draufsicht auf eine erste Seite eines Stahlträgers eines Fundaments gemäß der Erfindung. Die erste Seite 1210 wird insbesondere an einen Befestigungsabschnitt 1160 der Zentraleinheit 1100 verschweißt.

Fig. 5F und 5G zeigen jeweils einen Ausschnitt eines erfindungsgemäßen Fundaments einer Windenergieanlage auf. Insbesondere ist in Fig. 5F eine Draufsicht auf eine zweite Seite 1220 gezeigt. Der Stahlträger 1200 weist ein erstes (unteres) Ende 1223, ein zweites (oberes) Ende 1222 sowie ein sich dazwischen befindliches Blech 1230 auf. Zwischen dem Blech 1230 und den Fundament-Fertigteilen 1300 können Druckkissen 1227 beispielsweise aus Polymer vorgesehen sein.

In Fig. 5G sind keine Druckkissen, sondern Spindel in einer Tasche 1228 zwischen den Betonfertigteilen und dem Stahlarm 1200 vorgesehen.

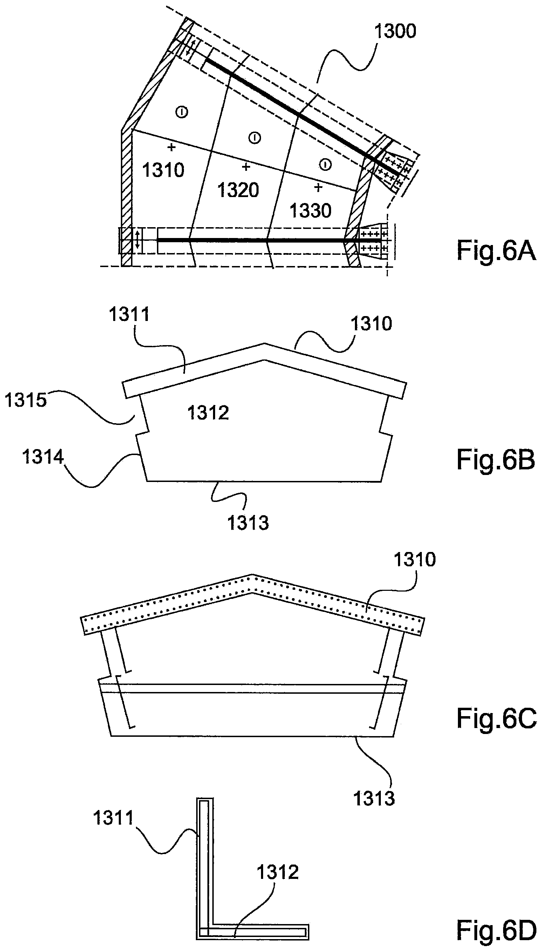

Fig. 6A-6H zeigen verschiedene Ansichten von Betonfertigteilen des Windenergieanlagen-Fundaments gemäß der Erfindung. Die Betonfertigteile 1300 werden zwischen benachbarten Stahlträgern bzw. Stahlarmen 1200 des Fundaments der Windenergieanlage gemäß der Erfindung platziert. Die Betonfertigteile 1300 sind dreigeteilt und weisen somit ein erstes, zweites und drittes Teil 1310, 1320, 1330 auf. Das erste Betonfertigteil 1310 ist am äußeren Rand, das zweite Betonfertigteil 1320 ist in der Mitte und das dritte Betonfertigteil 1330 ist innen vorgesehen.

Das erste und zweite Betonfertigteil 1310, 1320 weist jeweils eine Wandung auf, so dass durch die Betonfertigteile 1310-1330 und den benachbarten Stahlträgern 1200 eine Wanne entsteht, welche durch Kies, Sand, Erde, Beton 2000 gefüllt werden kann.

In den Fig. 6B bis 6D sind verschiedene Ansichten des ersten Betonfertigteils 1310 gezeigt. Das erste Betonfertigteil 1310 weist eine Wandung 1311, einen Boden 1312 und eine gerade Seite 1313 auf, welche der Wandung 1311 gegenüberliegt. Die Wandung 1311 ist hierbei im Wesentlichen rechtwinklig zu dem Boden 1312 ausgestaltet. Das erste Betonfertigteil 1310 ist im Wesentlichen fünfeckig ausgestaltet, wobei an den beiden Seiten 1314 jeweils eine Ausnehmung 1315 vorhanden ist.

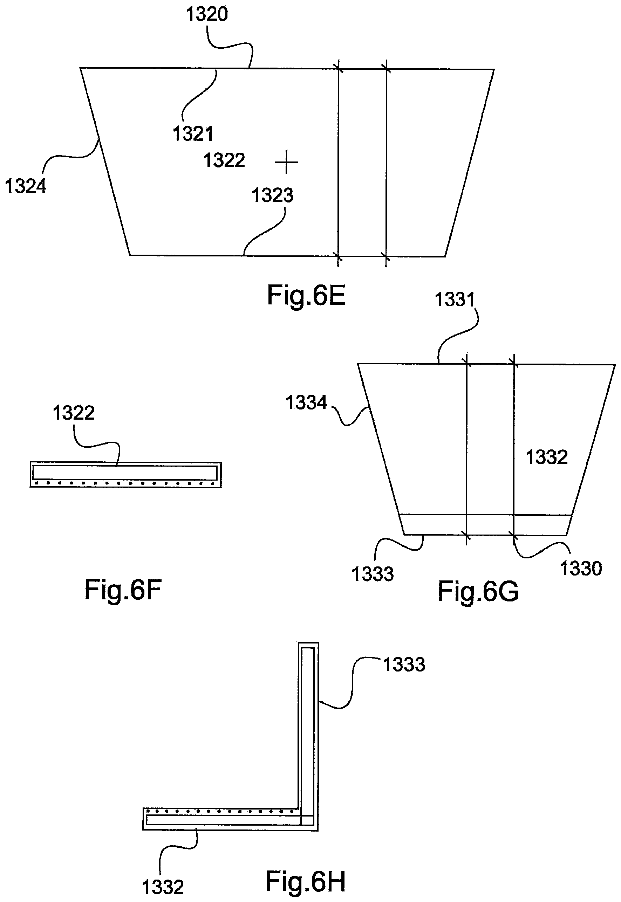

Fig. 6E und 6F zeigen verschiedene Ansichten des zweiten Betonfertigteils. Das zweite Betonfertigteil 1300 weist eine erste und zweite Seite 1321, 1323, welche parallel zueinander angeordnet sind. Ferner weist das zweite Betonfertigteil 1320 zwei Seitenflächen 1324 auf.

Fig. 6G und 6H zeigen verschiedene Ansichten des dritten Betonfertigteiles 1330 auf. Das dritte Betonfertigteil 1330 weist eine Wandung 1333 und eine erste Seite 1331 auf, welche parallel zueinander angeordnet sind. Ferner weist das dritte Betonfertigteil 1330 einen Boden 1332 auf, welcher im Wesentlichen im rechten Winkel zu der Wandung 1333 befindet.

## Patentansprüche

1. Windenergieanlagen-Fundament (1000), insbesondere für Permafrostböden, mit einer zylinderförmigen Zentraleinheit (1100),
einer Mehrzahl von Stahlträgern (1200), welche radial um die Zentraleinheit (1100) herum angeordnet sind und jeweils ein erstes und zweites Ende (1210, 1220) aufweisen,
wobei die ersten Enden (1210) der Stahlträger (1200) an der Zentraleinheit (1100) befestigt sind, so dass die zweiten Enden (1220) der Stahlträger (1200) als freie Enden ausgestaltet sind,
einer Mehrzahl von Fundament-Pfählen (1400),
wobei die zweiten freien Enden (1220) der Stahlträger (1200) jeweils auf den Fundament-Pfählen (1400) platziert sind, und
einer Mehrzahl von Betonfertigteilen (1300), welche jeweils zwischen benachbarten Stahlträgern (1200) platziert sind, so dass durch die Betonfertigteile (1300) und den benachbarten Stahlträgern (1200) jeweils eine Wanne entsteht, welche mit Beton, Kies und/oder Erde (2000) befüllbar ist.

2. Windenergieanlagen-Fundament nach Anspruch 1, ferner mit einer Mehrzahl von Nivellierplatten (1470), welche auf den Fundament-Pfählen (1400) angeordnet sind und nach einer entsprechenden Nivellierung die zweiten freien Enden (1220) der Stahlträger (1200) aufnehmen.

3. Windenergieanlagen-Fundament nach einem der Ansprüche 1-2, wobei die Zentraleinheit (1100) ein erstes Ende (1110) und ein zweites Ende (1120) aufweist, wobei ein unteres Turmsegment (102) einer Windenergieanlage oder eine Turmsektion auf dem zweiten Ende (1120) der Zentraleinheit (1100) platziert werden kann.

4. Windenergieanlagen-Fundament nach einem der Ansprüche 1-3, wobei die Stahlträger (1200) im Bereich ihrer zweiten Enden (1220) Versteifungsstreben (1221) aufweisen.

5. Windenergieanlagen-Fundament nach einem der Ansprüche 1-4, wobei die Fundament-Pfähle (1400) im Bereich ihres oberen Endes (1430) jeweils einen Fundamentanker (1440, 1450) zur Befestigung der jeweiligen zweiten Enden (1220) der Stahlträger (1200) aufweisen.

6. Windenergieanlagen-Fundament nach Anspruch 5, wobei die Fundament-Pfähle (1400) einen ersten, zweiten und dritten Abschnitt (1410, 1420, 1430) aufweisen, wobei der Durchmesser des dritten Abschnittes (1430) größer ist als der des ersten oder zweiten Abschnittes (1410, 1420).

7. Windenergieanlagen-Fundament nach Anspruch 6, wobei der erste, zweite und dritte Abschnitt (1410, 1420, 1430) der Fundament-Pfähle (1400) jeweils als ein Rohr ausgestaltet ist.

8. Windenergieanlagen-Fundament nach Anspruch 6 oder 7, wobei die Fundament-Pfähle (1400) jeweils eine Mehrzahl von in Längsrichtung verlaufenden Streben oder Stäben sowie mindestens eine Wendel aufweisen.

9. Windenergieanlagen-Fundament nach einem der Ansprüche 7-8, wobei die Fundament-Pfähle (1400) mit Beton aufgefüllt sind.

10. Windenergieanlage mit
einem Windenergieanlagen-Fundament nach einem der Ansprüche 1-9.

11. Verfahren zum Erstellen eines Windenergieanlagen-Fundaments (1000) mit den Schritten:
Platzieren einer zylinderförmigen Zentraleinheit (1100),
Platzieren einer Mehrzahl von Stahlträgern (1200) radial um die Zentraleinheit (1100),
wobei die Stahlträger (1200) jeweils ein erstes und zweites Ende (1210, 1220) aufweisen,
wobei die ersten Enden (1210) der Stahlträger (1200) jeweils an der Zentraleinheit (1100) befestigt sind, so dass die zweiten Enden (1220) der Stahlträger (1200) als freie Enden ausgestaltet sind, und
Platzieren einer Mehrzahl von Fundament-Pfählen (1400) zumindest teilweise in einem Boden,
wobei die zweiten freien Enden (1220) der Stahlträger (1200) jeweils auf den aus dem Boden herausragenden Enden der Fundament-Pfähle (1400) platziert sind, und
Platzieren einer Mehrzahl von Betonfertigteilen (1300) zwischen benachbarten Stahlträgern (1200), so dass durch die Betonfertigteile (1300) und die benachbarten Stahlträger (1200) jeweils mindestens eine Wanne entsteht, und
Befüllen der mindestens einen Wanne mit Beton, Kies und/oder Erde (2000).

12. Verwenden eines Windenergieanlagen-Fundaments (1000) nach Anspruch 1 in einem Permafrostboden.

## Claims

1. A wind power installation foundation (1000), in particular for permafrost grounds, comprising
a cylindrical central unit (1100),
a plurality of steel carriers (1200) which are arranged radially around the central unit (1100) and respectively have a first and a second end (1210, 1220),
wherein the first ends (1210) of the steel carriers (1200) are fixed to
the central unit (1100) so that the second ends (1220) of the steel carriers (1200) are in the form of free ends, and
a plurality of foundation piles (1400),
wherein the second free ends (1220) of the steel carriers (1200) are
respectively placed on the foundation piles (1400) and
a plurality of precast concrete parts (1300) which are respectively placed between adjacent steel carriers (1200) so that the precast concrete parts (1300) and the adjacent steel carriers (1200) respectively afford a trough which can be filled with concrete, gravel and/or earth (2000).

2. A wind power installation foundation as set forth in claim 1 and further comprising
a plurality of leveling plates (1470) which are arranged on the foundation piles (1400) and which are after suitable leveling receive the second free ends (1220) of the steel carriers (1200).

3. A wind power installation foundation as set forth in one of claims 1 t and 2 wherein
the central unit (1100) has a first end (1110) and a second end (1120), wherein a lower pylon segment (102) of a wind power installation or a pylon section can be placed on the second end (1120) of the central unit (1100).

4. A wind power installation foundation as set forth in one of claims 1 through 3 wherein
in the region of their second ends (1220) the steel carriers (1200) have reinforcing struts (1221).

5. A wind power installation foundation as set forth in one of claims 1 through 4 wherein
in the region of their upper end (1430) the foundation piles (1400) each have a foundation anchor (1440, 1450) for fixing the respective second ends (1220) of the steel carriers (1200).

6. A wind power installation foundation as set forth in claim 5 wherein
the foundation piles (1400) have a first, second and third portion (1410, 1420, 1430), wherein the diameter of the third portion (1430) is larger than that of the first or second portion (1410, 1420).

7. A wind power installation foundation as set forth in claim 6 wherein
the first, second and third portions (1410, 1420, 1430) of the foundation piles (1400) are each in the form of a tube.

8. A wind power installation foundation as set forth in claim 6 or claim 7 wherein
the foundation piles (1400) respectively have a plurality of struts or bars extending in the longitudinal direction and at least one coil.

9. A wind power installation foundation as set forth in one of claims67 through 8 wherein
the foundation piles (1400) are filled with concrete.

10. A wind power installation comprising
a wind power installation foundation as set forth in one of claims 1 through 9.

11. A method of producing a wind power installation foundation (1000) comprising the steps:
placing a cylindrical central unit (1100),
placing a plurality of steel carriers (1200) radially around the central unit (1100),
wherein the steel carriers (1200) respectively have a first and a second end (1210, 1220),
wherein the first ends (1210) of the steel carriers (1200) are respectively fixed to the central unit (1100) so that the second ends (1220) of the steel carriers (1200) are in the form of free ends, and
placing a plurality of foundation piles (1400) at least partially in a ground,
wherein the second free ends (1220) of the steel carriers (1200) are respectively placed on the ends, projecting out of the ground, of the foundation piles (1400), and
placing a plurality of precast concrete parts (1300) between adjacent steel carriers (1200) so that at least one respective trough is afforded by the precast concrete parts (1300) and the adjacent steel carriers (1200), and
filling the at least one trough with concrete, gravel and/or earth (2000).

12. Use of a wind power installation foundation (1000) as set forth in claim 1 in a permafrost ground.

## Revendications

1. Socle d'éolienne (1000), en particulier pour des permafrosts, avec une unité centrale (1100) de forme cylindrique,
une pluralité de supports en acier (1200), lesquels sont disposés radialement tout autour de l'unité centrale (1100) et présentent respectivement une première et une seconde extrémité (1210, 1220),
dans lequel les premières extrémités (1210) des supports en acier (1200) sont fixées à l'unité centrale (1100) de sorte que les secondes extrémités (1220) des supports en acier (1200) soient configurées sous la forme d'extrémités libres,
une pluralité de pilots de socle (1400),
dans lequel les secondes extrémités (1220) libres des supports en acier (1200) sont placées respectivement sur les pilots de socle (1400), et
une pluralité de parties préfabriquées en béton (1300), lesquelles sont placées respectivement entre des supports en acier (1200) adjacents de sorte que respectivement une cuve, laquelle peut être remplie de béton, de gravier et/ou de terre (2000), soit formée par les parties préfabriquées en béton (1300) et les supports en acier (1200) adjacents.

2. Socle d'éolienne selon la revendication 1, avec en outre
une pluralité de plaques de nivellement (1470), lesquelles sont disposées sur les pilots de socle (1400) et reçoivent, après un nivellement correspondant, les secondes extrémités (1220) libres des supports en acier (1200).

3. Socle d'éolienne selon l'une quelconque des revendications 1 - 2, dans lequel
l'unité centrale (1100) présente une première extrémité (1110) et une seconde extrémité (1120), dans lequel un segment de tour inférieur (102) d'une éolienne ou une section de tour peut être placé sur la seconde extrémité (1120) de l'unité centrale (1100).

4. Socle d'éolienne selon l'une quelconque des revendications 1 - 3, dans lequel
les supports en acier (1200) présentent, dans la zone de leurs secondes extrémités (1220), des entretoises de renfort (1221) .

5. Socle d'éolienne selon l'une quelconque des revendications 1 - 4, dans lequel
les pilots de socle (1400) présentent, dans la zone de leur extrémité supérieure (1430), respectivement un système d'ancrage de socle (1440, 1450) servant à fixer les secondes extrémités (1220) respectives des supports en acier (1200).

6. Socle d'éolienne selon la revendication 5, dans lequel
les pilots de socle (1400) présentent une première, une deuxième et une troisième section (1410, 1420, 1430), dans lequel le diamètre de la troisième section (1430) est plus grand que celui de la première ou de la deuxième section (1410, 1420).

7. Socle d'éolienne selon la revendication 6, dans lequel
la première, la deuxième et la troisième section (1410, 1420, 1430) des pilots de socle (1400) sont configurées respectivement sous la forme d'un tube.

8. Socle d'éolienne selon la revendication 6 ou 7, dans lequel
les pilots de socle (1400) présentent respectivement une pluralité d'entretoises ou de barres s'étendant dans le sens longitudinal ainsi qu'au moins une hélice.

9. Socle d'éolienne selon l'une quelconque des revendications 7 - 8, dans lequel
les pilots de socle (1400) sont remplis de béton.

10. Eolienne avec
un socle d'éolienne selon l'une quelconque des revendications 1 - 9.

11. Procédé servant à créer un socle d'éolienne (1000) avec les étapes suivantes :
placement d'une unité centrale (1100) de forme cylindrique,
placement d'une pluralité de supports en acier (1200) de manière radiale autour de l'unité centrale (1100),
dans lequel les supports en acier (1200) présentent respectivement une première et une seconde extrémité (1210, 1220),
dans lequel les premières extrémités (1210) des supports en acier (1200) sont fixées respectivement à l'unité centrale (1100) de sorte que les secondes extrémités (1220) des supports en acier (1200) soient configurées sous la forme d'extrémités libres, et
placement d'une pluralité de pilots de socle (1400) au moins en partie dans un sol,
dans lequel les secondes extrémités (1220) libres des supports en acier (1200) sont placées respectivement sur les extrémités, dépassant du sol, des pilots de socle (1400), et
placement d'une pluralité de parties préfabriquées en béton (1300) entre des supports en acier (1200) adjacents de sorte que respectivement au moins une cuve soit formée par les parties préfabriquées en béton (1300) et les supports en acier (1200) adjacents, et
remplissage de l'au moins une cuve avec du béton, du gravier et/ou de la terre (2000).

12. Utilisation d'un socle d'éolienne (1000) selon la revendication 1 dans un permafrost.
